# EUROPEAN PATENT APPLICATION

(11) **EP 4 626 042 A1**
(43) Date of publication of application: **01.10.2025**
(21) Application number: 23909855.1
(22) Date of filing: 27.11.2023
(51) Int. Cl.: H04W 4/02, H04W 64/00

(54) **COMMUNICATION METHOD AND RELATED APPARATUS**

(30) Priority: 30.12.2022 CN 202211736055
(71) Applicant: Huawei Technologies Co., Ltd., Shenzhen, Guangdong 518129 (CN)
(72) Inventor: LIU, Heng, Shenzhen, Guangdong 518129 (CN); HAO, Jinping, Shenzhen, Guangdong 518129 (CN); ZHU, Ningbo, Shenzhen, Guangdong 518129 (CN)
(74) Representative: Pfenning, Meinig & Partner mbB
(86) International application number: PCT/CN2023/134371
(87) International publication number: WO 2024/139924

(57) **Abstract**

A communication method and a related apparatus are provided, to excite a first apparatus to send a positioning reference signal, so as to position the first apparatus based on the positioning reference signal, and meet a requirement for positioning the first apparatus. The method includes: A first apparatus receives first information from a network device, where the first information is used to excite the first apparatus to send the positioning reference signal. The first apparatus sends the positioning reference signal based on the first information.

## Description

This application claims priority to Chinese Patent Application No. 202211736055.X, filed with the China National Intellectual Property Administration on December 30, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

A passive internet of things (passive internet of things, PIoT) is a communication system including a new energy-saving tag (tag) terminal and a reader. The reader may remotely read information about the tag terminal. The passive internet of things has low maintenance costs, and includes miniaturized devices. Therefore, the passive internet of things is widely applied to manufacturing, logistics, electric power, animal husbandry, and the like. For example, the passive internet of things may be applied to warehousing scenarios. The reader needs to measure a location of the tag terminal, to facilitate material query and high-value goods management, and implement storage location-level positioning, with a specific positioning precision of 2 meters to 3 meters.

However, the tag terminal has a weak signal processing capability, and therefore cannot implement a complex signal processing algorithm. Therefore, a positioning capability of the tag terminal is limited, and a conventional positioning method cannot be directly applied to the tag terminal. For example, the tag terminal cannot perform downlink positioning measurement. Therefore, how to position the tag terminal to meet a positioning requirement is an urgent problem to be resolved.

### SUMMARY

This application provides a communication method and a related apparatus, to excite a first apparatus to send a positioning reference signal.

A first aspect of this application provides a communication method, including:
A first apparatus receives first information from a network device, where the first information is used to excite the first apparatus to send a positioning reference signal. The first apparatus sends the positioning reference signal based on the first information.

In the foregoing technical solution, the first information is used to excite the first apparatus to send the positioning reference signal. The first apparatus sends the positioning reference signal by using the first information. The positioning reference signal may be used to position the first apparatus, to meet a requirement for positioning the first apparatus. For example, the first apparatus does not have a capability of actively sending a signal, but the first apparatus may send a signal after being excited. The network device may excite, by using the first information, the first apparatus to send the positioning reference signal, so that the first apparatus sends the positioning reference signal. For example, the first apparatus does not have a complex signal processing capability, but the first apparatus may send a signal after being excited. The network device may excite, by using the first information, the first apparatus to send the positioning reference signal, and the positioning reference signal may be used to position the first apparatus, so that the first apparatus is positioned.

Based on the first aspect, in a possible implementation, the first information includes memory address information used to store configuration information of the positioning reference signal in the first apparatus, or the first information includes start memory address information used to store the configuration information of the positioning reference signal in the first apparatus, and a data length.

In this implementation, the first information further includes the memory address information of the configuration information of the positioning reference signal. This facilitates the first apparatus reading the configuration information of the positioning reference signal based on the memory address information, to generate the positioning reference signal and send the positioning reference signal. The positioning reference signal may be used to position the first apparatus, to facilitate positioning the first apparatus. In addition, this helps avoid a case in which the first apparatus and another apparatus use a same positioning reference signal, to avoid interference.

Based on the first aspect, in a possible implementation, the configuration information of the positioning reference signal includes sequence information used to generate the positioning reference signal.

In this implementation, the first apparatus does not have a capability of implementing a complex signal processing algorithm. For example, the first apparatus cannot generate a sequence used to generate the positioning reference signal. In the foregoing implementation, the first apparatus can generate the positioning reference signal based on the sequence information and send the positioning reference signal. The positioning reference signal may be used to position the first apparatus, so that the first apparatus is positioned.

Based on the first aspect, in a possible implementation, the configuration information of the positioning reference signal further includes frequency domain information of the positioning reference signal. In this implementation, the frequency domain information of the positioning reference signal is further limited, to facilitate correctly receiving and sending the positioning reference signal between the network device and the first apparatus.

Based on the first aspect, in a possible implementation, that the first apparatus sends the positioning reference signal based on the first information includes: The first apparatus reads, from a corresponding memory address of the first apparatus based on the first information, a sequence used to generate the positioning reference signal. The first apparatus generates the positioning reference signal based on the sequence. The first apparatus sends the positioning reference signal.

In this implementation, the first apparatus is a low-capability tag terminal. For example, the first apparatus does not have a capability of implementing a complex signal processing algorithm. The first apparatus cannot generate the sequence used to generate the positioning reference signal. Therefore, the first apparatus may store the sequence used to generate the positioning reference signal. The first apparatus may directly read the sequence from the corresponding memory address, and does not need to generate the sequence. Then, the first apparatus generates the positioning reference signal based on the sequence, and sends the positioning reference signal. The positioning reference signal may be used to position the first apparatus, so that the first apparatus is positioned.

Based on the first aspect, in a possible implementation, before the first apparatus receives the first information from the network device, the method further includes: The first apparatus receives configuration information from the network device, where the configuration information includes the configuration information of the positioning reference signal. The first apparatus writes the configuration information of the positioning reference signal into the corresponding memory address of the first apparatus.

In this implementation, the first apparatus has a write capability, and the first apparatus may write, into the corresponding memory address, the configuration information of the positioning reference signal configured by the network device for the first apparatus. This facilitates the first apparatus reading the configuration information of the positioning reference signal from the memory address, and generating and sending the positioning reference signal.

Based on the first aspect, in a possible implementation, the configuration information of the positioning reference signal includes the sequence used to generate the positioning reference signal. The configuration information further includes the start memory address information and the data length for the sequence. That the first apparatus writes the configuration information of the positioning reference signal into the corresponding memory address of the first apparatus includes: The first apparatus determines the memory address based on the start memory address information and the data length. The first apparatus writes the sequence into the memory address.

In this implementation, the first apparatus does not have a capability of implementing a complex signal processing algorithm. For example, the first apparatus cannot generate the sequence used to generate the positioning reference signal. Therefore, the configuration information of the positioning reference signal may include the sequence used to generate the positioning reference signal. Then, the first apparatus may determine the corresponding memory address based on the start memory address information and the data length for the sequence, and write the sequence into the memory address. This facilitates the first apparatus reading the sequence from the memory address, and generating and sending the positioning reference signal. The positioning reference signal may be used to position the first apparatus, so that the first apparatus is positioned.

Based on the first aspect, in a possible implementation, the method further includes: The first apparatus sends a reply message to the network device, where the reply message indicates that the configuration information of the positioning reference signal is successfully written into the memory address. In this implementation, the network device may determine, based on the reply message, that the configuration information of the positioning reference signal is successfully written into the memory address. This facilitates the network device exciting the first apparatus to send the positioning reference signal.

Based on the first aspect, in a possible implementation, the method further includes: The first apparatus sends second information to a core network device or a positioning device, where the second information includes at least one of the following: a tag type and positioning capability information of the first apparatus. In this implementation, the first apparatus may report the second information. This facilitates the positioning device requesting, based on the second information, the network device to configure a proper positioning reference signal for the first apparatus, and using a proper manner to excite the first apparatus to send the positioning reference signal.

Based on the first aspect, in a possible implementation, the tag type is a passive tag terminal, a semi-passive tag terminal, or an active tag terminal. In this implementation, several possible implementations of the tag type are shown. This facilitates the positioning device requesting to configure a proper positioning reference signal for the first apparatus, and using a proper manner to excite the first apparatus to send the positioning reference signal. For example, the first apparatus is the active tag terminal, and the first apparatus may actively send a signal. Therefore, the network device may send the first information once, to excite, by using the first information, the first apparatus to send the positioning reference signal a plurality of times. For example, the first apparatus is the passive tag terminal or the semi-passive tag terminal, the network device may send the first information a plurality of times, to excite the first apparatus to send the positioning reference signal a plurality of times.

Based on the first aspect, in a possible implementation, the positioning capability information includes at least one of the following: a capability of supporting positioning or not, and a positioning reference signal sending capability. This facilitates the positioning device determining, based on the positioning capability information, whether the first apparatus supports positioning and the like.

A second aspect of this application provides a communication method, including:
A network device determines first information, where the first information is used to excite a first apparatus to send a positioning reference signal. The network device sends the first information to the first apparatus.

In the foregoing technical solution, the first information is used to excite the first apparatus to send the positioning reference signal. The first apparatus sends the positioning reference signal by using the first information. The positioning reference signal may be used to position the first apparatus, to help position the first apparatus and meet a requirement for positioning the first apparatus. For example, the first apparatus does not have a capability of actively sending a signal, but the first apparatus may send a signal after being excited. The network device may excite, by using the first information, the first apparatus to send the positioning reference signal, so that the first apparatus sends the positioning reference signal. For example, the first apparatus does not have a complex signal processing capability, but the first apparatus may send a signal after being excited. The network device may excite, by using the first information, the first apparatus to send the positioning reference signal, so that the first apparatus sends the positioning reference signal. The positioning reference signal may be used to position the first apparatus, so that the first apparatus is positioned.

Based on the second aspect, in a possible implementation, the first information includes memory address information used to store configuration information of the positioning reference signal in the first apparatus, or the first information includes start memory address information used to store the configuration information of the positioning reference signal in the first apparatus, and a data length, where the start memory address information and the data length are used to determine a memory address of the configuration information of the positioning reference signal.

In this implementation, the first information further includes the memory address information of the configuration information of the positioning reference signal. This facilitates the first apparatus reading the configuration information of the positioning reference signal based on the memory address information, to generate the positioning reference signal and send the positioning reference signal. The positioning reference signal may be used to position the first apparatus, to facilitate positioning the first apparatus. In addition, this helps avoid a case in which the first apparatus and another apparatus use a same positioning reference signal, to avoid interference.

Based on the second aspect, in a possible implementation, before the network device sends the first information to the first apparatus, the method further includes: The network device sends configuration information to the first apparatus, where the configuration information includes the configuration information of the positioning reference signal.

In this implementation, the first apparatus has a write capability, and the first apparatus may write, into the corresponding memory address, the configuration information of the positioning reference signal configured by the network device for the first apparatus. This facilitates the first apparatus reading the configuration information of the positioning reference signal from the memory address, and generating and sending the positioning reference signal. The positioning reference signal may be used to position the first apparatus, so that the first apparatus is positioned.

Based on the second aspect, in a possible implementation, the configuration information of the positioning reference signal includes a sequence used to generate the positioning reference signal; and the configuration information further includes the memory address information of the sequence; or the configuration information includes the start memory address information and the data length for the sequence, where the start memory address information and the data length are used to determine the memory address for storing the sequence.

In this implementation, the first apparatus does not have a capability of implementing a complex signal processing algorithm. For example, the first apparatus cannot generate the sequence used to generate the positioning reference signal. Therefore, the configuration information of the positioning reference signal may include the sequence used to generate the positioning reference signal. The configuration information includes the start memory address information and the data length for the sequence, where the start memory address information and the data length are used to determine the memory address for storing the sequence. This facilitates the first apparatus reading the sequence from the memory address, and generating and sending the positioning reference signal.

Based on the second aspect, in a possible implementation, the method further includes: The network device receives a reply message from the first apparatus, where the reply message indicates that the configuration information of the positioning reference signal is successfully written into the corresponding memory address. In this implementation, the network device may determine, based on the reply message, that the configuration information of the positioning reference signal is successfully written into the memory address. This facilitates the network device exciting the first apparatus to send the positioning reference signal.

Based on the second aspect, in a possible implementation, before the network device sends the configuration information to the first apparatus, the method further includes: The network device receives a first request from a positioning device, where the first request is used to request the network device to configure the positioning reference signal for the first apparatus, and the first request includes an identifier of the first apparatus. The network device sends a first response to the positioning device, where the first response includes the configuration information of the positioning reference signal.

In this implementation, the network device may further receive the first request from the positioning device, so that the network device configures the configuration information of the positioning reference signal for the first apparatus. The identifier of the first apparatus identifies the first apparatus, so that the network device configures the configuration information of the positioning reference signal for the first apparatus. Further, the network device may further send the first response to the positioning device, and include the configuration information of the positioning reference signal in the first response, to facilitate the positioning device requesting another network device to position the first apparatus. This helps improve positioning precision.

Based on the second aspect, in a possible implementation, the identifier of the first apparatus includes an electronic product code (electronic product code, EPC) or a terminal identifier (Terminal ID, TID) of the first apparatus. This facilitates the network device identifying the first apparatus.

Based on the second aspect, in a possible implementation, the first request further includes a type of the first apparatus, and the type of the first apparatus is a tag terminal.

In this implementation, the network device may determine that the first apparatus is the tag terminal. The network device may configure configuration information of a proper positioning reference signal for the first apparatus. The tag terminal is a low-capability terminal. For example, the tag terminal does not have a capability of implementing a complex signal processing algorithm. The tag terminal cannot generate the sequence. Therefore, the network device may configure, for the first apparatus, the sequence used to generate the positioning reference signal. This facilitates the first apparatus generating the positioning reference signal based on the sequence and sending the positioning reference signal. The positioning reference signal may be used to position the first apparatus, so that the first apparatus is positioned. In addition, the tag terminal usually can send a signal only after being excited. Therefore, the network device may excite, by using the first information, the tag terminal to send the positioning reference signal, so that the first apparatus sends the positioning reference signal.

Based on the second aspect, in a possible implementation, before the network device sends the first information to the first apparatus, the method further includes: The network device receives a second request from the positioning device, where the second request is used to request the network device to excite the first apparatus to send the positioning reference signal, and the second request further includes information about a positioning exciting periodicity or information about a quantity of positioning exciting times, where the information about the positioning exciting periodicity indicates a periodicity in which the network device excites the first apparatus to send the positioning reference signal, and the information about the quantity of positioning exciting times indicates a quantity of times the network device excites the first apparatus to send the positioning reference signal.

In this implementation, the second request further includes the positioning exciting periodicity or the quantity of positioning exciting times. This facilitates the network device sending the first information to the first apparatus based on the information about the positioning exciting periodicity or the information about the quantity of positioning exciting times. The network device excites, a plurality of times, the first apparatus to send the positioning reference signal, to help improve positioning precision of positioning the first apparatus.

Based on the second aspect, in a possible implementation, that the network device sends the first information to the first apparatus includes:
The network device sends the first information to the first apparatus based on the information about the positioning exciting periodicity or the information about the quantity of positioning exciting times. The network device excites, a plurality of times, the first apparatus to send the positioning reference signal, to help improve positioning precision of positioning the first apparatus.

Based on the second aspect, in a possible implementation, before the network device determines the first information, the method further includes:
The network device sends indication information to the positioning device, where the indication information indicates that the network device supports a function of communicating with the tag terminal, indicates that the network device has an exciting function, or indicates that the network device has a function of exciting the tag terminal to send the positioning reference signal. This facilitates the positioning device selecting a proper network device, configured to communicate with the first apparatus, to position the first apparatus.

Based on the second aspect, in a possible implementation, the method further includes: The network device measures the positioning reference signal to obtain a measurement result. The network device sends the measurement result to the positioning device. Therefore, the positioning device positions the first apparatus based on the measurement result.

A third aspect of this application provides a communication method, including:
A positioning device sends a first request to a network device, where the first request is used to request the network device to configure a positioning reference signal for the first apparatus, and the first request includes an identifier of the first apparatus. The positioning device receives a first response from the network device, where the first response includes configuration information of the positioning reference signal configured by the network device for the first apparatus.

In the foregoing technical solution, the positioning device sends the first request to the network device, and the first request includes the identifier of the first apparatus. The identifier of the first apparatus identifies the first apparatus. Therefore, the network device configures the configuration information of the positioning reference signal for the first apparatus. Further, the network device may further send the first response to the positioning device, and include the configuration information of the positioning reference signal in the first response, to facilitate the positioning device requesting another network device to position the first apparatus. This helps improve positioning precision.

Based on the third aspect, in a possible implementation, the identifier of the first apparatus includes an EPC code or a TID of the first apparatus. This facilitates the network device identifying the first apparatus.

Based on the third aspect, in a possible implementation, the first request further includes a type of the first apparatus, and the type of the first apparatus is a tag terminal.

In this implementation, this helps the network device configure configuration information of a proper positioning reference signal for the first apparatus based on the first request. The tag terminal is a low-capability terminal. For example, the tag terminal does not have a capability of implementing a complex signal processing algorithm. The tag terminal cannot generate a sequence. Therefore, the network device may configure, for the first apparatus, a sequence used to generate the positioning reference signal. This facilitates the first apparatus generating the positioning reference signal based on the sequence and sending the positioning reference signal, to positioning the first apparatus. In addition, the tag terminal usually can send a signal only after being excited. Therefore, the network device may excite, by using the first information, the tag terminal to send the positioning reference signal, so that the first apparatus sends the positioning reference signal.

Based on the third aspect, in a possible implementation, before the positioning device sends the first request to the network device, the method further includes: The positioning device receives second information from a core network device or the first apparatus, where the second information includes at least one of the following: a tag type and positioning capability information of the first apparatus. This facilitates the positioning device requesting, based on the second information, the network device to configure a proper positioning reference signal for the first apparatus, and using a proper manner to excite the first apparatus to send the positioning reference signal.

Based on the third aspect, in a possible implementation, the tag type is a passive tag terminal, a semi-passive tag terminal, or an active tag terminal.

In this implementation, several possible implementations of the tag type are shown. This facilitates the positioning device requesting to configure a proper positioning reference signal for the first apparatus, and using a proper manner to excite the first apparatus to send the positioning reference signal. For example, the first apparatus is the active tag terminal, and the first apparatus may actively send a signal. Therefore, the network device may send the first information once, to excite, by using the first information, the first apparatus to send the positioning reference signal a plurality of times. For example, the first apparatus is the passive tag terminal or the semi-passive tag terminal, the network device may send the first information a plurality of times, to excite the first apparatus to send the positioning reference signal a plurality of times.

Based on the third aspect, in a possible implementation, the positioning capability information includes at least one of the following: a capability of supporting positioning or not, and a positioning reference signal sending capability. This facilitates the positioning device determining, based on the positioning capability information, whether the first apparatus supports positioning and the like.

Based on the third aspect, in a possible implementation, before the positioning device sends the first request to the network device, the method further includes: The positioning device receives indication information from the network device, where the indication information indicates that the network device supports a function of communicating with the tag terminal, indicates that the network device has an exciting function, or indicates that the network device has a function of exciting the tag terminal to send the positioning reference signal. This facilitates the positioning device selecting a proper network device, configured to communicate with the first apparatus, to position the first apparatus.

Based on the third aspect, in a possible implementation, after the positioning device receives the first response from the network device, the method further includes: The positioning device sends a second request to the network device, where the second request is used to request the network device to excite the first apparatus to send the positioning reference signal, and the second request further includes information about a positioning exciting periodicity or information about a quantity of positioning exciting times, where the information about the positioning exciting periodicity indicates a periodicity in which the network device excites the first apparatus to send the positioning reference signal, and the information about the quantity of positioning exciting times indicates a quantity of times the network device excites the first apparatus to send the positioning reference signal. Therefore, the network device excites the first apparatus to send the positioning reference signal, to position the first apparatus. In addition, after receiving the second request, the network device may excite, a plurality of times based on the positioning exciting periodicity or the quantity of positioning exciting times, the first apparatus to send the positioning reference signal, to help improve positioning precision of positioning the first apparatus.

Based on the third aspect, in a possible implementation, the method further includes: The positioning device receives a measurement result from the network device. The positioning device positions the first apparatus based on the measurement result.

A fourth aspect of this application provides a first apparatus, including:
a transceiver module, configured to: receive first information from a network device, where the first information is used to excite the first apparatus to send a positioning reference signal; and send the positioning reference signal based on the first information.

Based on the fourth aspect, in a possible implementation, the first information includes memory address information used to store configuration information of the positioning reference signal in the first apparatus, or the first information includes start memory address information used to store the configuration information of the positioning reference signal in the first apparatus, and a data length.

Based on the fourth aspect, in a possible implementation, the configuration information of the positioning reference signal includes sequence information used to generate the positioning reference signal.

Based on the fourth aspect, in a possible implementation, the configuration information of the positioning reference signal further includes frequency domain information of the positioning reference signal.

Based on the fourth aspect, in a possible implementation, the transceiver module is specifically configured to:
read, based on the first information, a sequence used to generate the positioning reference signal from a corresponding memory address of the first apparatus; generate the positioning reference signal based on the sequence; and send the positioning reference signal.

Based on the fourth aspect, in a possible implementation, the transceiver module is further configured to receive configuration information from the network device, where the configuration information includes the configuration information of the positioning reference signal.

The first apparatus further includes a processing module. The processing module is configured to write the configuration information of the positioning reference signal into the corresponding memory address of the first apparatus.

Based on the fourth aspect, in a possible implementation, the configuration information of the positioning reference signal includes the sequence used to generate the positioning reference signal. The configuration information further includes the start memory address information and the data length for the sequence. The processing module is specifically configured to: determine the memory address based on the start memory address information and the data length; and write the sequence into the memory address.

Based on the fourth aspect, in a possible implementation, the transceiver module is further configured to send a reply message to the network device, where the reply message indicates that the configuration information of the positioning reference signal is successfully written into the memory address.

Based on the fourth aspect, in a possible implementation, the transceiver module is further configured to send second information to a core network device or a positioning device, where the second information includes at least one of the following: a tag type and positioning capability information of the first apparatus.

Based on the fourth aspect, in a possible implementation, the tag type is a passive tag terminal, a semi-passive tag terminal, or an active tag terminal.

Based on the fourth aspect, in a possible implementation, the positioning capability information includes at least one of the following: a capability of supporting positioning or not, and a positioning reference signal sending capability.

A fifth aspect of this application provides a communication apparatus, including:
a processing module, configured to determine first information, where the first information is used to excite a first apparatus to send a positioning reference signal; and
a transceiver module, configured to send the first information to the first apparatus.

Based on the fifth aspect, in a possible implementation, the first information includes memory address information used to store configuration information of the positioning reference signal in the first apparatus, or the first information includes start memory address information used to store the configuration information of the positioning reference signal in the first apparatus, and a data length, where the start memory address information and the data length are used to determine a memory address of the configuration information of the positioning reference signal.

Based on the fifth aspect, in a possible implementation, the transceiver module is further configured to send configuration information to the first apparatus, where the configuration information includes the configuration information of the positioning reference signal.

Based on the fifth aspect, in a possible implementation, the configuration information of the positioning reference signal includes a sequence used to generate the positioning reference signal; and the configuration information further includes the memory address information of the sequence; or the configuration information includes the start memory address information and the data length for the sequence, where the start memory address information and the data length are used to determine the memory address for storing the sequence.

Based on the fifth aspect, in a possible implementation, the transceiver module is further configured to receive a reply message from the first apparatus, where the reply message indicates that the configuration information of the positioning reference signal is successfully written into the corresponding memory address.

Based on the fifth aspect, in a possible implementation, the transceiver module is further configured to: receive a first request from a positioning device, where the first request is used to request the communication apparatus to configure the positioning reference signal for the first apparatus, and the first request includes an identifier of the first apparatus; and send a first response to the positioning device, where the first response includes the configuration information of the positioning reference signal.

Based on the fifth aspect, in a possible implementation, the first request further includes a type of the first apparatus, and the type of the first apparatus is a tag terminal.

Based on the fifth aspect, in a possible implementation, the transceiver module is further configured to receive a second request from the positioning device, where the second request is used to request the communication apparatus to excite the first apparatus to send the positioning reference signal, and the second request further includes information about a positioning exciting periodicity or information about a quantity of positioning exciting times, where the information about the positioning exciting periodicity indicates a periodicity in which the communication apparatus excites the first apparatus to send the positioning reference signal, and the information about the quantity of positioning exciting times indicates a quantity of times the communication apparatus excites the first apparatus to send the positioning reference signal.

Based on the fifth aspect, in a possible implementation, the transceiver module is specifically configured to send the first information to the first apparatus based on the information about the positioning exciting periodicity or the information about the quantity of positioning exciting times.

Based on the fifth aspect, in a possible implementation, the transceiver module is further configured to send indication information to the positioning device, where the indication information indicates that the communication apparatus supports a function of communicating with the tag terminal, indicates that the communication apparatus has an exciting function, or indicates that the communication apparatus has a function of exciting the tag terminal to send the positioning reference signal.

Based on the fifth aspect, in a possible implementation, the communication apparatus further includes the processing module.

The processing module is configured to measure the positioning reference signal to obtain a measurement result.

The transceiver module is further configured to send the measurement result to the positioning device.

A sixth aspect of this application provides a communication apparatus, including:
a transceiver module, configured to: send a first request to a network device, where the first request is used to request the network device to configure a positioning reference signal for a first apparatus, and the first request includes an identifier of the first apparatus; and receive a first response from the network device, where the first response includes configuration information of the positioning reference signal configured by the network device for the first apparatus.

Based on the sixth aspect, in a possible implementation, the first request further includes a type of the first apparatus, and the type of the first apparatus is a tag terminal.

Based on the sixth aspect, in a possible implementation, the transceiver module is further configured to:
receive second information from a core network device or the first apparatus, where the second information includes at least one of the following: a tag type and positioning capability information of the first apparatus.

Based on the sixth aspect, in a possible implementation, the tag type is a passive tag terminal, a semi-passive tag terminal, or an active tag terminal.

Based on the sixth aspect, in a possible implementation, the positioning capability information includes at least one of the following: a capability of supporting positioning or not, and a positioning reference signal sending capability.

Based on the sixth aspect, in a possible implementation, the transceiver module is further configured to:
receive indication information from the network device, where the indication information indicates that the network device supports a function of communicating with the tag terminal, indicates that the network device has an exciting function, or indicates that the network device has a function of exciting the tag terminal to send the positioning reference signal.

Based on the sixth aspect, in a possible implementation, the transceiver module is further configured to:
send a second request to the network device, where the second request is used to request the network device to excite the first apparatus to send the positioning reference signal, and the second request further includes information about a positioning exciting periodicity or information about a quantity of positioning exciting times, where the information about the positioning exciting periodicity indicates a periodicity in which the network device excites the first apparatus to send the positioning reference signal, and the information about the quantity of positioning exciting times indicates a quantity of times the network device excites the first apparatus to send the positioning reference signal.

Based on the sixth aspect, in a possible implementation, the transceiver module is further configured to:
receive a measurement result from the network device.

The communication apparatus further includes a processing module.

The processing module is configured to position the first apparatus based on the measurement result.

A seventh aspect of this application provides a first apparatus, where the first apparatus includes a processor. The processor is configured to invoke a computer program or computer instructions in a storage, to enable the processor to be configured to perform any one of the implementations according to the first aspect.

Optionally, the first apparatus further includes a transceiver. The processor is configured to control the transceiver to perform any one of the implementations according to the first aspect.

Optionally, the processor is integrated with the storage.

An eighth aspect of this application provides a communication apparatus, where the communication apparatus includes a processor. The processor is configured to invoke a computer program or computer instructions stored in a storage, to enable the processor to implement any one of the implementations according to the first aspect or the second aspect.

Optionally, the communication apparatus further includes a transceiver. The processor is configured to control the transceiver to perform any one of the implementations according to the first aspect or the second aspect.

Optionally, the communication apparatus includes the storage. The processor is integrated with the storage.

A ninth aspect of this application provides a computer program product including computer instructions. When the computer program product runs on a computer, the computer is enabled to perform any one of the implementations according to the first aspect to the third aspect.

A tenth aspect of this application provides a computer-readable storage medium, including computer instructions. When the computer instructions are run on a computer, the computer is enabled to perform any one of the implementations according to the first aspect to the third aspect.

An eleventh aspect of this application provides a chip apparatus, including a processor, configured to invoke a computer program or computer instructions in a storage, to enable the processor to perform any one of the implementations according to any one of the first aspect to the third aspect.

Optionally, the processor is coupled to the storage through an interface.

A twelfth aspect of this application provides a communication system. The communication system includes the first apparatus shown according to the first aspect and the network device shown according to the second aspect.

Optionally, the communication system further includes the positioning device shown according to the third aspect.

It can be seen from the foregoing technical solutions that embodiments of this application have the following advantages.

It can be learned from the foregoing technical solutions that the first apparatus receives the first information from the network device. The first information is used to excite the first apparatus to send the positioning reference signal. Then, the first apparatus sends the positioning reference signal based on the first information. It can be learned that the first information is used to excite the first apparatus to send the positioning reference signal. The first apparatus sends the positioning reference signal by using the first information. The positioning reference signal may be used to position the first apparatus, so that the first apparatus is positioned, to meet the requirement for positioning the first apparatus. For example, the first apparatus does not have the capability of actively sending the signal, but the first apparatus may send the signal after being excited. The network device may excite, by using the first information, the first apparatus to send the positioning reference signal, so that the first apparatus sends the positioning reference signal. For example, the first apparatus does not have the complex signal processing capability, but the first apparatus may send the signal after being excited. The network device may excite, by using the first information, the first apparatus to send the positioning reference signal, so that the first apparatus sends the positioning reference signal.

### BRIEF DESCRIPTION OF DRAWINGS

FIG. 1 is a diagram of a communication system according to an embodiment of this application;
FIG. 2 is a diagram of a structure of a next generation NodeB (next Generation NodeB, gNB) according to an embodiment of this application;
FIG. 3 is a diagram of a memory of a tag terminal according to an embodiment of this application;
FIG. 4 is a schematic flowchart of querying a tag terminal by a reader according to an embodiment of this application;
FIG. 5 is a diagram of an embodiment of a communication method according to an embodiment of this application;
FIG. 6 is a diagram of another embodiment of a communication method according to an embodiment of this application;
FIG. 7 is a diagram of a structure of a first apparatus according to an embodiment of this application;
FIG. 8 is a diagram of a first structure of a communication apparatus according to an embodiment of this application;
FIG. 9 is a diagram of a second structure of a communication apparatus according to an embodiment of this application;
FIG. 10 is a diagram of another structure of a first apparatus according to an embodiment of this application; and
FIG. 11 is a diagram of a third structure of a communication apparatus according to an embodiment of this application.

### DESCRIPTION OF EMBODIMENTS

Embodiments of this application provide a communication method and a related apparatus, to excite a first apparatus to send a positioning reference signal, so as to position the first apparatus based on the positioning reference signal, and meet a requirement for positioning the first apparatus.

The following clearly and completely describes technical solutions in embodiments of this application with reference to accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

The term "and/or" in this application describes an association relationship for describing associated objects and indicates that three relationships may exist. For example, A and/or B may indicate the following three cases: Only A exists, both A and B exist, and only B exists. In addition, the character "/" in this application generally indicates an "or" relationship between the associated objects.

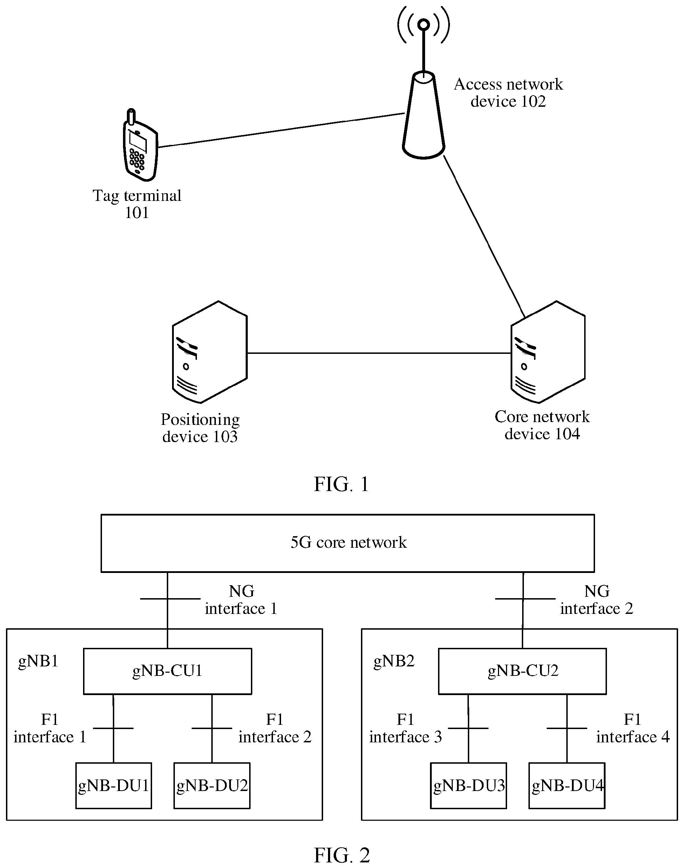

FIG. 1 is a diagram of a communication system according to an embodiment of this application. The communication system includes a tag terminal 101 and an access network device 102. Optionally, the communication system further includes a positioning device 103 and a core network device 104.

The access network device 102 is a base station integrated with a reader, and supports communicating with the tag terminal 101. For the tag terminal, refer to related descriptions below.

The positioning device 103 is configured to perform positioning calculation and management on the tag terminal 101. For example, the positioning device 103 may be a location management function (location management function, LMF).

The core network device 104 is equivalent to a router for communication between the access network device 102 and the positioning device 103. The core network device 104 is used for access control, registration management, service management, mobility management, and the like for the tag terminal 101 to access a network. For example, the core network device is an access and mobility management function (access and mobility management function, AMF).

FIG. 1 shows only an example in which the communication system includes the access network device 102. In actual application, the communication system may further include more access network devices. This is not specifically limited in this application.

It should be noted that the AMF is responsible for the access control, the registration management, the service management, the mobility management, and the like for the tag terminal to access the network. A name of the AMF may change with evolution of the communication system. In a current communication system or a future communication system, a functional network element that has another name and that has a function similar to that of the AMF may be understood as the AMF in this application, and is applicable to a communication method provided in embodiments of this application.

In this application, the LMF is a name in the current communication system. In the future communication system, the name of the LMF may change with evolution of the communication system. Therefore, the LMF is referred to as a positioning device below to describe technical solutions in this application. The positioning device is configured to perform positioning calculation on a location of the tag terminal. In the current communication system or the future communication system, a functional network element that has another name and that has a function similar to that of the positioning device may be understood as the positioning device in this application, and is applicable to the communication method provided in this application.

The communication system provided in this application includes a first apparatus and a network device. Optionally, the communication system further includes the core network device and the positioning device.

In this application, the first apparatus is a low-capability apparatus. For example, the first apparatus cannot implement a complex signal processing algorithm, and the first apparatus cannot generate a sequence used to generate a positioning reference signal. The first apparatus may also be referred to as a tag (tag) terminal, or may also be referred to as another name. This is not specifically limited in this application. The following describes some functions of the first apparatus by using the tag terminal as an example.

The tag terminal has a read capability, and can read corresponding data or information from a memory address of the tag terminal. The tag terminal may be excited to send the positioning reference signal.

Optionally, the tag terminal further has at least one of the following capabilities: a write capability, a counting capability, a timing capability, or a capability of actively sending a signal. The write capability means that the tag terminal can write data or information into a memory of the tag terminal. The counting capability means that the tag terminal can perform counting. The timing capability means that the tag terminal can perform timing. The capability of actively sending the signal means that the tag terminal can actively generate a corresponding carrier for sending the signal.

Optionally, the tag terminal includes a passive tag terminal, a semi-passive tag terminal, or an active tag terminal.

The passive tag terminal provides energy for the passive tag terminal by receiving a signal. For example, the passive tag terminal receives an electromagnetic wave, and converts the electromagnetic wave into electric energy, to provide the energy for a passive tag terminal. The passive tag terminal does not support amplifying a transmit signal and supports power consumption at a level of µW (microwatt). The passive tag terminal cannot actively send a signal, and can send a signal only after being excited. In other words, the passive tag terminal cannot actively generate a carrier for carrying a to-be-sent signal.

The semi-passive tag terminal supports solar energy and the like in providing energy for the semi-passive tag terminal. The semi-passive tag terminal supports amplifying a transmit signal and supports power consumption at a level of hundreds of microwatts. For example, the semi-passive tag terminal supports power consumption at a level of 100 µW. The semi-passive tag terminal cannot actively send a signal, and can send a signal only after being excited. In other words, the semi-passive tag terminal cannot actively generate a carrier for carrying a to-be-sent signal.

The active tag terminal supports solar energy, a battery, and the like in providing energy for the active tag terminal. The active tag terminal supports amplifying a transmit signal and supports power consumption at a level of hundreds of microwatts. For example, the active tag terminal supports power consumption at a level of 500 µW, and can actively send a signal. In other words, the active tag terminal can actively generate a carrier for carrying a to-be-sent signal.

The tag terminal includes a handheld device, a vehicle-mounted device, a wearable device, or the like that has a wireless communication function. Currently, some examples of the tag terminal are: a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in telemedicine, a wireless terminal in a smart grid (smart grid), a wireless terminal in transportation safety (transportation safety), a wireless terminal in a smart city (smart city), a wireless terminal in a smart home (smart home), or the like. It should be noted that the tag terminal may alternatively be the device or apparatus shown above, or a component (for example, a chip), a module, or a unit in the device or apparatus shown above. This is not specifically limited in this application.

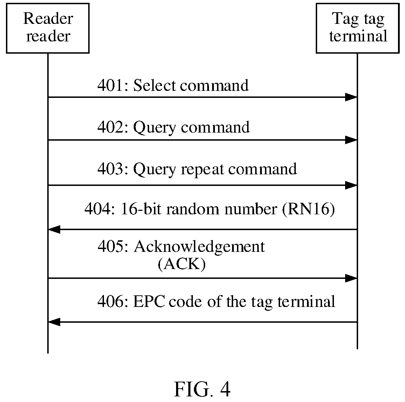

The network device is a reader (reader), or the network device is a device integrated with the reader. The network device supports communicating with the tag terminal. For example, the network device has a query function and an exciting function. To be specific, the network device supports querying the tag terminal. For a specific query procedure, refer to related descriptions of a procedure shown in FIG. 4. The network device supports exciting the tag terminal to send a signal. The network device further has a function of reading data or information of the tag terminal, and the network device further supports writing data or information into the tag terminal. For example, the network device writes configuration information of the positioning reference signal into the tag terminal.

Optionally, the network device may be an access network device or a core network device. The access network device is a device that is deployed in a radio access network and that provides a wireless communication function for the tag terminal. For example, the access network device includes a base station. The base station includes a macro base station, a micro base station (also referred to as a small cell), a relay station, an access point (access point, AP), a wearable device, a vehicle-mounted device, and the like in various forms. The base station may further include a transmission reception point (transmission reception point, TRP), a transmission measurement function (transmission measurement function, TMF), and the like. For example, the base station mentioned in this application may be a base station in new radio (new radio, NR). The base station in the 5G NR may further include a transmission reception point (transmission reception point, TRP), a transmission point (transmission point, TP), a gNB, an evolved NodeB (evolved NodeB, eNB or eNodeB) in a long term evolution (long term evolution, LTE) system, or a base station or a node in a future communication system, for example, a base station in a 6G communication system.

It should be noted that the network device may alternatively be the device or apparatus shown above, or a component, a module, or a unit in the device or apparatus shown above. This is not specifically limited in this application. For example, the network device may be one or more modules in the device shown above.

The core network device is responsible for the access control, the registration management, the service management, the mobility management, and the like for the tag terminal to access the network. For example, the core network device is the AMF.

The positioning device is configured to perform positioning calculation and management on the location of the tag terminal. For example, the positioning device is the LMF.

The following describes a possible structure of the access network device in FIG. 1. Herein, an example in which the access network device includes the gNB is used for description. This is also applicable to other types of access network devices.

FIG. 2 is a diagram of a structure of a network device according to an embodiment of this application. An example in which the network device is a gNB is used. Refer to FIG. 2, in a 5G communication system, gNBs are connected through an Xn interface, and the gNB is connected to a 5^{th} generation mobile communication technology core (5^{th} generation mobile communication technology core, 5GC) network through an NG interface. As shown in FIG. 2, a gNB1 and a gNB2 are connected through the Xn interface. The gNB1 is connected to the 5GC through an NG interface 1, and the gNB2 is connected to the 5GC through an NG interface 2.

The gNB may include a central unit (central unit, CU) and a distributed unit (distributed unit, DU). To be specific, functions of a base station are split, a part of the functions of the base station is deployed on a gNB-CU, and a remaining function is deployed on a gNB-DU. A plurality of gNB-DUs share one gNB-CU. This can reduce costs and facilitate network expansion. For example, as shown in FIG. 2, the gNB1 includes a gNB-CU1, a gNB-DU1, and a gNB-DU2. The gNB-CU1 is connected to the gNB-DU1 through an F1 interface 1, and is connected to the gNB-DU2 through an F1 interface 2. A structure of the gNB2 is similar to a structure of the gNB1. Details are not described one by one herein again.

FIG. 2 is merely an example. One gNB-CU may be connected to one or more gNB-DUs. This is not specifically limited in this application.

The gNB-CU and the gNB-DU may be split based on a protocol stack. For example, a protocol stack of a radio resource control (radio resource control, RRC) layer, a service data adaptation protocol (service data adaptation protocol, SDAP) layer, and a packet data convergence protocol (packet data convergence protocol, PDCP) layer is deployed on the gNB-CU. A protocol stack of a radio link control (radio link control, RLC) layer, a media access control (media access control, MAC) layer, and a physical (physical, PHY) layer is deployed on the gNB-DU. The gNB-CU and the gNB-DU are connected through the F1 interface. The foregoing examples are merely intended to describe the gNB-CU and the gNB-DU. Protocol stacks deployed on the gNB-CU and the gNB-DU are not limited in this application.

In this application, in the following solution in which the access network device uses a structure of the CU and the DU, the gNB-CU is referred to as the CU for short, and the gNB-DU is referred to as the DU for short.

The following describes a memory of a tag terminal.

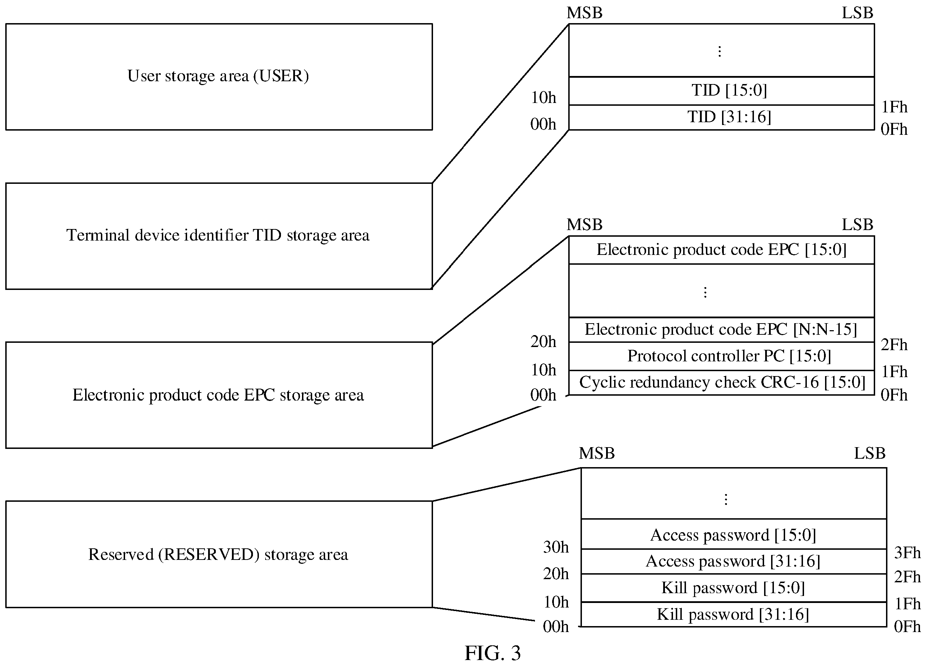

The memory of the tag terminal is logically divided into four storage areas. Specifically, the memory of the tag terminal includes a reserved (reserved) storage area, an EPC storage area, a TID storage area, and a user (user) storage area from bottom to top based on memory logical addresses. Each storage area includes at least one storage byte. As shown in FIG. 3, the user storage area is an area customized by a user of the tag terminal based on an application requirement of the user, and a content format in the area is not specified.

The TID storage area starts from a logical address 00h, and an area in which a 1^{st} byte in the TID storage area starts is usually used to store a sequence number of the tag terminal. In "00h", "00" indicates a logical address, and "h" indicates a hexadecimal system.

The EPC storage area is an information storage area used to distinguish the tag terminal from another tag terminal when the tag terminal is queried. As specified in a protocol, a cyclic redundancy check (cyclic redundancy check 16, CRC-16) is stored in a 1^{st} byte in the EPC storage area. This byte is not allowed to be modified. Specifically, the tag terminal obtains a value of the CRC-16 through calculation by using a protocol controller (protocol controller, PC) and an EPC code of the tag terminal, and then writes the value into the 1^{st} byte in the EPC storage area. The PC of the tag terminal is stored in a 2^{nd} byte in the EPC storage area, and five most-significant bits (that is, 10h to 14h bits) of the 2^{nd} byte are used to calculate a length of the EPC code of the tag terminal. 00000 indicates that the length of the EPC is 0 bytes, and 11111 indicates that the length of the EPC is 63 bytes. The EPC storage area stores the EPC code of the tag terminal starting from a 3^{rd} byte. It can be learned, from a method for calculating the length of the EPC code specified in the protocol, that the EPC code has a maximum length of 63 bytes. In addition, information such as the PC and the CRC-16 is included. Therefore, a maximum storage capacity of the EPC storage area is 65 bytes.

The reserved storage area is a 1^{st} logical storage area of the tag terminal, and mainly stores a 32-bit password needed in a process of accessing the tag terminal: a password of a kill command and a password of a lock command.

The following describes, with reference to FIG. 4, a process in which a reader queries a tag terminal.

401: The reader sends a select command. The select command includes a mask of a tag terminal selected by the reader.

Specifically, the reader broadcasts the select command. After receiving the select command, the tag terminal determines whether a mask carried in the select command includes the mask of the tag terminal, and if the mask includes the mask of the tag terminal, it indicates that the tag terminal is selected. The tag terminal changes a query flag of the tag terminal. For example, the tag terminal may set the query flag of the tag terminal to 0.

402: The reader sends a query (Query) command, to negotiate a data rate, a coding mode, and the like for querying. After the tag terminal receives the query command, the tag terminal resets a slot counter of the tag terminal, and specifically resets the slot counter to a random number.

403: The reader sends a query repeat (QueryRep) command.

Specifically, each time the tag terminal receives the query repeat command of the reader, a count of the slot counter is decreased by 1. When the count of the slot counter is equal to 0, the following 404 is performed.

404: The tag terminal sends a 16-bit random number (random number 16, RN16) to the reader.

405: After the reader receives the RN16, the reader sends an acknowledgement (acknowledgement, ACK) to the tag terminal.

406: The tag terminal sends an EPC code of the tag terminal to the reader.

Correspondingly, the reader reads the EPC code. In this case, the tag terminal exits the current query procedure, and waits for being selected next time.

A passive internet of things (passive internet of things, PIoT) is a communication system including a new energy-saving tag (tag) terminal and a reader. The reader may remotely read information about the tag terminal. The passive internet of things has low maintenance costs, and includes miniaturized devices. Therefore, the passive internet of things is widely applied to regulations, logistics, electric power, animal husbandry, and the like. For example, the passive internet of things may be applied to a warehousing scenario. The reader needs to measure a location of the tag terminal, to facilitate material query and high-value goods management, and implement storage location-level positioning, with a specific positioning precision of 2 meters to 3 meters.

However, the tag terminal has a weak signal processing capability, and therefore cannot implement a complex signal processing algorithm. Therefore, a positioning capability of the tag terminal is limited, and a conventional positioning method cannot be directly applied to the tag terminal. For example, the tag terminal cannot perform downlink positioning measurement. Therefore, how to position the tag terminal to meet a positioning requirement is an urgent problem to be resolved.

The following describes technical solutions of this application with reference to specific embodiments.

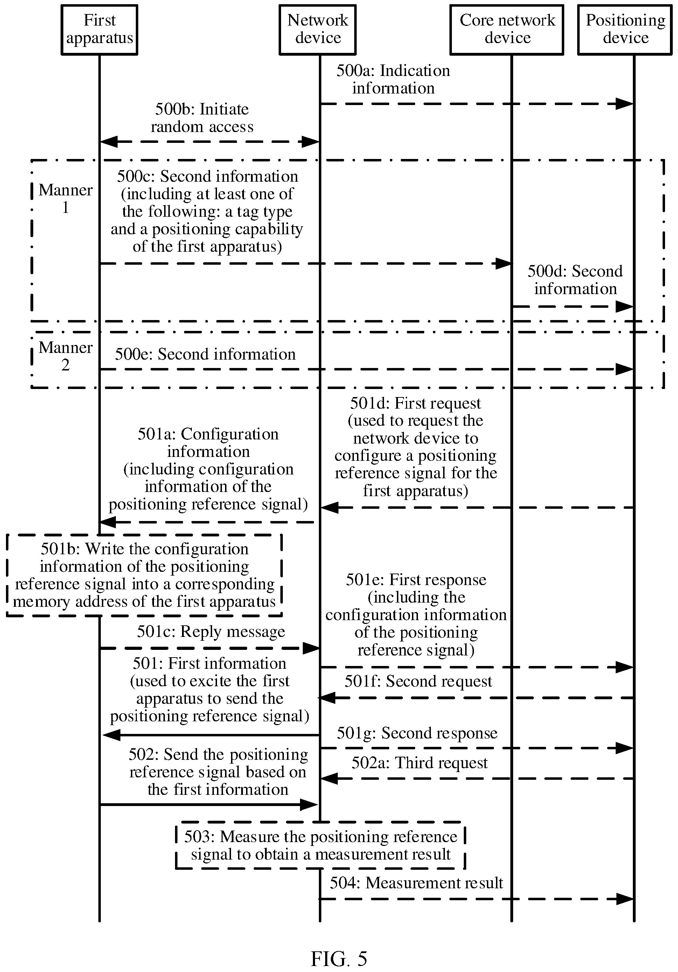

FIG. 5 is a diagram of an embodiment of a communication method according to an embodiment of this application. Refer to FIG. 5. The method includes the following steps.

501: A network device sends first information to a first apparatus. The first information is used to excite the first apparatus to send a positioning reference signal. Correspondingly, the first apparatus receives the first information from the network device.

The exciting may be understood as an indication or triggering. In other words, the first information indicates or is used to trigger the first apparatus to send the positioning reference signal.

Optionally, the first information includes an exciting operation, and the exciting operation is used to excite the first apparatus to send the positioning reference signal. The exciting operation may be a newly defined operation type, and is used to excite the first apparatus to send a signal.

In a possible implementation, the first information includes memory address information used to store configuration information of the positioning reference signal in the first apparatus, or the first information includes start memory address information used to store the configuration information of the positioning reference signal in the first apparatus, and a data length.

For example, the memory address information used to store the configuration information of the positioning reference signal in the first apparatus includes a memory address used to store the configuration information of the positioning reference signal in the first apparatus, or includes a first offset of the memory address relative to a default memory address. The first apparatus may determine the memory address based on the default memory address and the first offset.

For example, the start memory address information includes a start memory address used to store the configuration information of the positioning reference signal in the first apparatus, or includes a second offset of the start memory address relative to the default memory address. The first apparatus may determine the start memory address based on the default memory address and the second offset.

Optionally, the configuration information of the positioning reference signal includes sequence information used to generate the positioning reference signal.

For example, the configuration information includes a sequence used to generate the positioning reference signal, or the configuration information includes an identifier of the sequence used to generate the positioning reference signal. Specifically, a plurality of sequences may be preconfigured in the first apparatus. Then, the first apparatus may determine, from the plurality of sequences based on the identifier, the sequence used to generate the positioning reference signal.

The first apparatus does not have a capability of implementing a complex signal processing algorithm. For example, the first apparatus cannot generate the sequence. Therefore, when configuring the positioning reference signal for the first apparatus, the network device may configure, for the first apparatus, the sequence used to generate the positioning reference signal. This facilitates the first apparatus generating the positioning reference signal based on the sequence.

Further, optionally, the configuration information of the positioning reference signal further includes: frequency domain information of the positioning reference signal. For example, the first information further includes the memory address information used to store the frequency domain information in the first apparatus.

In another possible implementation, the memory address of the configuration information of the positioning reference signal is default between the first apparatus and the network device. In other words, it is default that the first apparatus determines the positioning reference signal by using configuration information of a positioning reference signal in a memory address.

In still another possible implementation, the configuration information of the positioning reference signal is determined by the first apparatus from a memory of the first apparatus. For example, the memory of the first apparatus stores configuration information of a plurality of positioning reference signals. The first apparatus selects configuration information of one positioning reference signal from the positioning reference signals, to determine the positioning reference signal.

It should be noted that optionally, the positioning reference signal is a sounding reference signal (sounding reference signal, SRS) or a newly defined positioning reference signal. This is not specifically limited in this application.

For forms of the first apparatus and the network device, refer to the related descriptions above.

Optionally, the network device may send the first information to the first apparatus by using a MAC CE, DCI, or an RRC message.

Optionally, the network device is an access network device, and the access network device uses the CU-DU split architecture shown in FIG. 2. In this case, step 501 may be performed by a CU or a DU. For example, the DU sends the first information to the first apparatus by using the media access control control element (media access control control element, MAC CE) or the downlink control information (downlink control information, DCI). For example, the CU sends the first information to the first apparatus by using the radio resource control (radio resource control, RRC) message.

Optionally, the first information further includes an identifier of the first apparatus. The identifier of the first apparatus includes an EPC code of the first apparatus or a TID of the first apparatus. The identifier of the first apparatus is used by the first apparatus to determine that the network device excites the first apparatus to send the positioning reference signal.

502: The first apparatus sends the positioning reference signal based on the first information.

The following describes step 502 with reference to step a to step c. Optionally, step 502 specifically includes step a to step c.

Step a: The first apparatus reads, from a corresponding memory address of the first apparatus based on the first information, the sequence used to generate the positioning reference signal.

The following describes several possible implementations of step a.

Implementation 1: The first information includes the memory address information used to store the configuration information of the positioning reference signal in the first apparatus, or the first information includes the start memory address information used to store the configuration information of the positioning reference signal in the first apparatus, and the data length.

The first apparatus determines the memory address of the configuration information of the positioning reference signal based on the first information. Then, the first apparatus reads the configuration information of the positioning reference signal from the memory address. The configuration information of the positioning reference signal includes the sequence used to generate the positioning reference signal.

Implementation 2: The memory address of the configuration information of the positioning reference signal is default between the first apparatus and the network device. In other words, the first apparatus determines the positioning reference signal by using the configuration information of the positioning reference signal of the default memory address.

In this implementation, the first apparatus reads the configuration information of the positioning reference signal from the default memory address. The configuration information of the positioning reference signal includes the sequence used to generate the positioning reference signal.

Implementation 3: The configuration information of the positioning reference signal is determined by the first apparatus from the memory of the first apparatus. For example, the memory of the first apparatus stores the configuration information of the plurality of positioning reference signals. The first apparatus selects configuration information of one positioning reference signal from the positioning reference signals.

In this implementation, the first apparatus reads the configuration information of the positioning reference signal from the memory address determined by the first apparatus. The configuration information of the positioning reference signal includes the sequence used to generate the positioning reference signal.

Step b: The first apparatus generates the positioning reference signal based on the sequence.

Step c: The first apparatus sends the positioning reference signal.

Optionally, the configuration information of the positioning reference signal includes the frequency domain information of the positioning reference signal. The first apparatus may send the positioning reference signal by using the frequency domain information. For example, the frequency domain information indicates a first frequency band, and the first apparatus sends the positioning reference signal by using the first frequency band.

Optionally, the embodiment shown in FIG. 5 further includes step 501a. Step 501a may be performed before step 501.

501a: The network device sends configuration information to the first apparatus. The configuration information includes the configuration information of the positioning reference signal. Correspondingly, the first apparatus receives the configuration information from the network device.

Optionally, the configuration information of the positioning reference signal includes the sequence used to generate the positioning reference signal. Further, optionally, the configuration information of the positioning reference signal further includes the frequency domain information of the positioning reference signal.

Optionally, the configuration information is carried in the RRC message, the MAC CE, or the DCI.

It should be noted that the network device may determine the configuration information for the first apparatus with reference to a sequence that is of another apparatus connected to the network device and that is used to generate the positioning reference signal, and frequency domain information used by the another apparatus to send the positioning reference signal. This helps avoid interference between different apparatuses. For example, the another apparatus sends the positioning reference signal by using a frequency band 1, and the network device may configure the first apparatus to send the positioning reference signal by using a frequency band 2. This avoids the interference.

501b: The first apparatus writes the configuration information of the positioning reference signal into the corresponding memory address of the first apparatus.

In a possible implementation, the configuration information further includes the start memory address information and the data length of the configuration information of the positioning reference signal. For example, the start memory address information includes the start memory address of the configuration information of the positioning reference signal or an offset of the start memory address of the configuration information of the positioning reference signal relative to the default memory address. Optionally, step 501b specifically includes: The first apparatus determines the memory address based on the start memory address information and the data length, and then writes the configuration information of the positioning reference signal into the memory address.

For example, the configuration information includes the sequence used to generate the positioning reference signal, and the start memory address information and the data length for the sequence. The first apparatus determines, based on the start memory address and the data length of the sequence, the memory address for storing the sequence, and then writes the sequence into the memory address.

Optionally, the embodiment shown in FIG. 5 further includes step 501c. Step 501c may be performed after step 501b.

501c: The first apparatus sends a reply message to the network device. Correspondingly, the network device receives the reply message from the first apparatus.

The reply message indicates that the first apparatus successfully writes the configuration information of the positioning reference signal.

Optionally, the reply message is carried in the RRC message or the MAC CE.

Optionally, the embodiment shown in FIG. 5 further includes step 501d and step 501e. Step 501d may be performed before step 501a, and step 501e may be performed after step 501c.

501d: A positioning device sends a first request to the network device. The first request is used to request the network device to configure the positioning reference signal for the first apparatus. Correspondingly, the network device receives the first request from the positioning device.

The first request includes the identifier of the first apparatus. The identifier of the first apparatus includes the EPC code or the TID of the first apparatus. The EPC code or the TID of the first apparatus is used by the network device to identify the first apparatus, to facilitate the network device configuring the positioning reference signal for the first apparatus.

Optionally, the first request further includes first indication information, and the first indication information indicates the network device to configure the positioning reference signal for the first apparatus.

Further, optionally, the first request further includes a type of the first apparatus, and the type of the first apparatus is a tag terminal. This facilitates the network device determining that the first apparatus is the tag terminal, and configuring a proper positioning reference signal for the first apparatus. For example, the first apparatus does not have the capability of implementing the complex signal processing algorithm, and the network device may configure, for the first apparatus, the sequence used to generate the positioning reference signal. In this case, the first apparatus may generate the positioning reference signal based on the sequence. This avoids a case in which the first apparatus cannot send the positioning reference signal because the first apparatus cannot generate the sequence, and consequently, the first apparatus cannot be positioned.

Further, optionally, the first request further includes a recommended configuration of the positioning reference signal. For example, the recommended configuration includes at least one of the following: information about a quantity of sending times or information about a sending periodicity of the positioning reference signal, information about the sequence used to generate the positioning reference signal, and the frequency domain information of the positioning reference signal.

Correspondingly, optionally, the network device may determine the configuration information of the positioning reference signal for the first apparatus with reference to the recommended configuration.

Optionally, the positioning device is an LMF or another device having a positioning capability. This is not specifically limited in this application.

Optionally, the first request is a positioning information request (positioning information request) message.

It should be noted that, in step 501, the first request may alternatively be replaced with a first indication or a first notification. The first indication indicates the network device to configure the positioning reference signal for the first apparatus. The first notification is used to notify the network device to configure the positioning reference signal for the first apparatus.

501e: The network device sends a first response to the positioning device. The first response includes the configuration information of the positioning reference signal. Correspondingly, the positioning device receives the first response from the network device.

The first response indicates that the positioning reference signal is successfully configured for the first apparatus.

Optionally, the first response is a positioning information response (positioning information response) message.

It should be noted that the first response includes the configuration information of the positioning reference signal. This facilitates the positioning device requesting at least one network device to position the first apparatus. For example, the positioning device may separately send a positioning measurement request to a plurality of TRPs, where the positioning measurement request includes the configuration information of the positioning reference signal. In this way, the plurality of TRPs position the first apparatus, to improve positioning precision.

Optionally, the embodiment shown in FIG. 5 further includes step 501f. Step 501f may be performed before step 501.

501f: The positioning device sends a second request to the network device. Correspondingly, the network device receives the second request from the positioning device.

The second request is used to request the network device to excite the first apparatus to send the positioning reference signal.

Optionally, the second request is a positioning activation request (positioning activation request) message.

It should be noted that optionally, the second request may alternatively be replaced with a second indication or a second notification. The second indication indicates the network device to excite the first apparatus to send the positioning reference signal. The second notification is used to notify the network device to excite the first apparatus to send the positioning reference signal.

Optionally, the second request further includes information about a positioning exciting periodicity or information about a quantity of positioning exciting times. The information about the positioning exciting periodicity indicates a periodicity in which the network device excites the first apparatus to send the positioning reference signal. The information about the quantity of positioning exciting times indicates a quantity of times the network device excites the first apparatus to send the positioning reference signal.

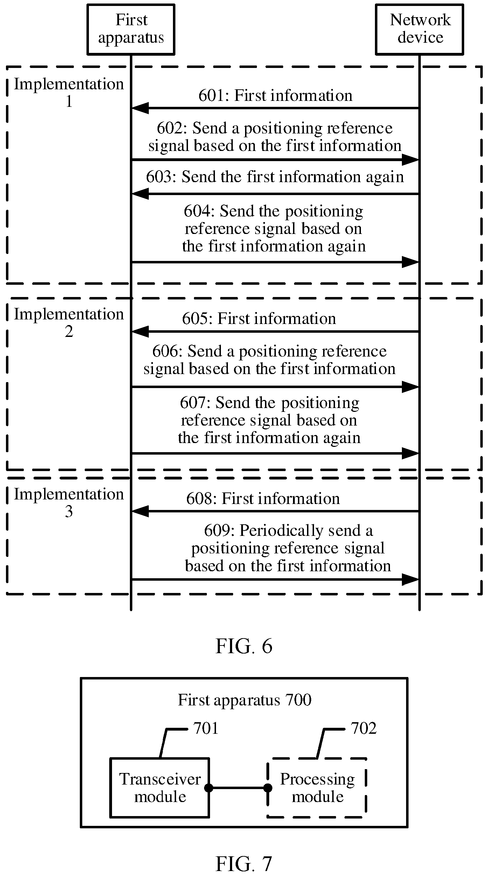

Based on this implementation, optionally, step 501 specifically includes: The network device sends the first information to the first apparatus based on the information about the positioning exciting periodicity or the information about the quantity of positioning exciting times. There are a plurality of manners in which the network device excites the first apparatus. For details, refer to related descriptions in FIG. 6 below.

It should be noted that optionally, if the embodiment shown in FIG. 5 further includes a process of step 501a to step 501c, step 501f may be performed after step 501c. If the embodiment shown in FIG. 5 further includes a process of step 501a to step 501e, step 501f may be performed after step 501e.

Optionally, the embodiment shown in FIG. 5 further includes step 501g. Step 501g may be performed after step 501.

501g: The network device sends a second response to the positioning device. Correspondingly, the positioning device receives the second response from the network device.

The second response indicates that the network device successfully excites the first apparatus to send the positioning reference signal.

Optionally, the second response is a positioning activation response (positioning activation response) message.

Optionally, the embodiment shown in FIG. 5 further includes step 502a. Step 502a may be performed after step 501 and before step 502.

502a: The positioning device sends a third request to the network device. Correspondingly, the network device receives the third request from the positioning device.

The third request is used to request the network device to measure the positioning reference signal sent by the first apparatus.

Optionally, the third request is a positioning measurement request (positioning measurement request) message.

It should be noted that optionally, if the embodiment shown in FIG. 5 further includes step 501f and step 501g, step 502a may be performed after step 501g.

Optionally, the embodiment shown in FIG. 5 further includes step 503 and step 504. Step 503 and step 504 may be performed after step 502.

503: The network device measures the positioning reference signal sent by the first apparatus to obtain a measurement result.

504: The network device sends the measurement result to the positioning device. Correspondingly, the positioning device receives the measurement result from the network device.

Optionally, the measurement result is carried in a measurement request response (positioning measurement response) message. The measurement request response message is a response to the third request in step 502a.

Optionally, the embodiment shown in FIG. 5 further includes step 500a. Step 500a may be performed before step 501.

500a: The network device sends indication information to the positioning device. Correspondingly, the positioning device receives the indication information from the network device.

The indication information indicates that the network device supports a function of communicating with the tag terminal, indicates that the network device has an exciting function, or indicates that the network device has a function of exciting the tag terminal to send the positioning reference signal.

Specifically, the network device is a reader, or a device integrated with the reader. The network device has a query function and an exciting function, and can query the tag terminal and excite the tag terminal to send the positioning reference signal.

Optionally, if the embodiment shown in FIG. 5 further includes step 501a to step 501c, there is no fixed execution sequence between step 500a and step 501a to step 501c. Step 500a may be performed before step 501a to step 501c; step 501a to step 501c are performed before step 500a; or step 500a and step 501a to step 501c are simultaneously performed based on a situation. This is not specifically limited in this application.

Optionally, if the embodiment shown in FIG. 5 further includes step 501a to step 501e, step 500a may be performed before step 501d.

Optionally, the embodiment shown in FIG. 5 further includes step 500b. Step 500b may be performed before step 501.

500b: The first apparatus initiates random access to the network device.

A process of step 500b is similar to the foregoing query procedure shown in FIG. 4. For details, refer to the related descriptions of the foregoing query procedure shown in FIG. 4.

Optionally, if the embodiment shown in FIG. 5 further includes step 501a to step 501c, step 501d, and step 501e, step 500b may be performed before step 501d. Optionally, if the embodiment shown in FIG. 5 further includes step 501a to step 501c, step 500b may be performed before step 501a.

It should be noted that there is no fixed execution sequence between step 500a and step 500b. Step 500a may be performed before step 500b; step 500b may be performed before step 500a; or step 500a and step 500b are simultaneously performed based on a situation. This is not specifically limited in this application.

Before step 501d, optionally, the positioning device obtains second information. The second information includes at least one of the following: a tag type and a positioning capability of the first apparatus.

Optionally, the tag type of the first apparatus includes any one of the following: a passive tag terminal, a semi-passive tag terminal, or an active tag terminal. For these tag types, refer to the related descriptions above.

Optionally, the positioning capability includes at least one of the following: a capability of supporting positioning or not, and a positioning reference signal sending capability. For example, the first apparatus supports a capability of sending an SRS.

Optionally, in step 501d, the positioning device may determine the recommended configuration of the positioning reference signal based on the second information. For example, the first apparatus is the passive tag terminal or the semi-passive tag terminal, and supports low power consumption. Therefore, the positioning device may recommend that the network device excites, a plurality of times, the first apparatus to send the positioning reference signal. This facilitates positioning the first apparatus based on positioning reference signals received a plurality of times, to improve positioning precision.

The following describes two possible implementations of obtaining the second information by the positioning device.

The following describes Manner 1 with reference to step 500c and step 500d. Optionally, the embodiment shown in FIG. 5 further includes step 500c and step 500d. Step 500c and step 500d may be performed before step 501d.

500c: The first apparatus sends the second information to a core network device. Correspondingly, the core network device receives the second information from the first apparatus.

For example, the core network device may be an AMF.

Optionally, the second information is carried in a non-access stratum (non-access stratum, NAS) registration request message.

Specifically, the first apparatus may send the NAS registration request message to the AMF. The NAS registration request message is used by the first apparatus to request to register with the AMF.

For a manner in which the second information is carried in the NAS registration request message, optionally, the core network device sends a registration response message to the first apparatus. The registration response message indicates that the registration of the first apparatus is completed.

500d: The core network device sends the second information to the positioning device. Correspondingly, the positioning device receives the second information from the core network device.

Optionally, the second information further includes the EPC code or the TID of the first apparatus. The EPC code or the TID of the first apparatus is used by the core network device and the positioning device to identify the first apparatus.

It should be noted that optionally, in step 500d, the core network device may process the second information to obtain third information. Then, the core network device sends the third information to the positioning device. For example, the second information includes the tag type of the first apparatus and the positioning capability of the first apparatus. The third information may include only the tag type of the first apparatus or the positioning capability of the first apparatus. Alternatively, the third information includes first indication information, the tag type of the first apparatus, and the positioning capability of the first apparatus. The first indication information indicates that the first apparatus is the tag terminal.

The following describes Manner 2 with reference to step 500e. Optionally, the embodiment shown in FIG. 5 further includes step 500e. Step 500e may be performed before step 501d.

500e: The first apparatus sends the second information to the positioning device. Correspondingly, the positioning device receives the second information from the first apparatus.

In this embodiment of this application, the first apparatus receives the first information from the network device. The first information is used to excite the first apparatus to send the positioning reference signal. Then, the first apparatus sends the positioning reference signal based on the first information. Therefore, it can be learned that the first information is used to excite the first apparatus to send the positioning reference signal. In other words, the first apparatus may send the positioning reference signal by using the first information. The first apparatus is positioned based on the positioning reference signal, to meet a requirement for positioning the first apparatus. For example, the tag terminal does not have a complex signal processing capability. Based on the technical solutions of this application, the tag terminal may receive the first information from the network device, and excite, by using the first information, the tag terminal to send the positioning reference signal, to position the tag terminal.

The following describes several possible implementations in which the network device excites the first apparatus to send the positioning reference signal. FIG. 6 is a diagram of another embodiment of a communication method according to an embodiment of this application.

The following describes Implementation 1 with reference to step 601 to step 604. Step 601 to step 604 are described by using an example in which a network device excites, twice, a first apparatus to send a positioning reference signal.

601: The network device sends first information to the first apparatus. Correspondingly, the first apparatus receives the first information from the network device.

602: The first apparatus sends the positioning reference signal to the network device based on the first information. Correspondingly, the network device receives the positioning reference signal from the first apparatus.

603: The network device sends the first information to the first apparatus again. Correspondingly, the first apparatus receives the first information from the network device.

604: The first apparatus sends the positioning reference signal to the network device based on the first information again. Correspondingly, the network device receives the positioning reference signal from the first apparatus.

In Implementation 1, optionally, the first apparatus does not have a counting capability or a timing capability. Therefore, the network device needs to excite, a plurality of times, the first apparatus to send the positioning reference signal. To be specific, the network device sends the first information a plurality of times, to excite, a plurality of times, the first apparatus to send the positioning reference signal.

In a possible implementation, Implementation 1 is described by using an example in which a quantity of positioning exciting times is 2. In actual application, the quantity of positioning exciting times may alternatively be 3, 4, or another quantity of times. This is not specifically limited in this application. For example, the quantity of positioning exciting times is N, and N is greater than or equal to 1. Each exciting process is similar to a process of step 601 and step 602.

In another possible implementation, a time interval between a sending moment at which the network device sends the first information in step 601 and a sending moment at which the network device sends the first information in step 603 is duration of a positioning exciting periodicity. Step 601 to step 604 are described by using an example of a process in which the network device excites, twice based on the positioning exciting periodicity, the first apparatus to send the positioning reference signal.

The following describes Implementation 2 with reference to step 605 to step 607.

605: A network device sends first information to a first apparatus. Correspondingly, the first apparatus receives the first information from the network device.

606: The first apparatus sends a positioning reference signal to the network device based on the first information. Correspondingly, the network device receives the positioning reference signal from the first apparatus.

607: The first apparatus sends the positioning reference signal to the network device based on the first information again. Correspondingly, the network device receives the positioning reference signal from the first apparatus again.

In this implementation, the first apparatus has a counting capability and a capability of actively sending a signal. The first information includes a quantity of positioning exciting times, and the first apparatus may send the first information based on the quantity of positioning exciting times.

Step 606 and step 607 describe a process in which the first apparatus sends the positioning reference signal by using an example in which the quantity of positioning exciting times is equal to 2. In actual application, the quantity of positioning exciting times may alternatively be 3, 4, or another quantity of times, and the first apparatus sends the positioning reference signal a plurality of times based on the quantity of positioning exciting times. For example, the quantity of positioning exciting times is 3. After the first apparatus receives the first information, the network device may send the positioning reference signal three times.

The following describes Implementation 3 with reference to step 608 and step 609.

608: A network device sends first information to a first apparatus. Correspondingly, the first apparatus receives the first information from the network device.

The first information includes information about a positioning exciting periodicity.

609: The first apparatus periodically sends a positioning reference signal to the network device based on the first information.

Specifically, the first apparatus has a timing capability and a capability of actively sending a signal. For example, the positioning exciting periodicity is 1 ms. After the first apparatus receives the first information, the first apparatus may send the positioning reference signal every 1 ms.

It can be learned from the foregoing three possible implementations that the network device may select a proper exciting manner with reference to a capability of the first apparatus, and excite, in the exciting manner, the first apparatus to send the positioning reference signal.

The following describes a first apparatus provided in embodiments of this application. FIG. 7 is a diagram of a structure of a first apparatus 700 according to an embodiment of this application. The first apparatus 700 includes a transceiver module 701. Optionally, the first apparatus 700 further includes a processing module 702.

The first apparatus 700 includes a tag terminal, or a component (for example, a chip), a module, or a unit in the tag terminal. The first apparatus 700 may be configured to perform all or a part of steps performed by the first apparatus in the embodiments shown in FIG. 5 and FIG. 6. For details, refer to the related descriptions in the embodiments shown in FIG. 5 and FIG. 6.

For example, the transceiver module 701 is configured to perform step 501 and step 502 in the embodiment shown in FIG. 5.

Optionally, the transceiver module 701 is further configured to perform step 501a and step 501c in the embodiment shown in FIG. 5. The processing module 702 is configured to perform step 501b in the embodiment shown in FIG. 5.

Optionally, the transceiver module 701 is further configured to perform step 500b in the embodiment shown in FIG. 5.

Optionally, the transceiver module 701 is further configured to perform step 500c or step 500e in the embodiment shown in FIG. 5.

For example, the transceiver module 701 is configured to perform step 601 to step 604 in the embodiment shown in FIG. 6; configured to perform step 605 to step 607 in the embodiment shown in FIG. 6; or configured to perform step 608 and step 609 in the embodiment shown in FIG. 6.

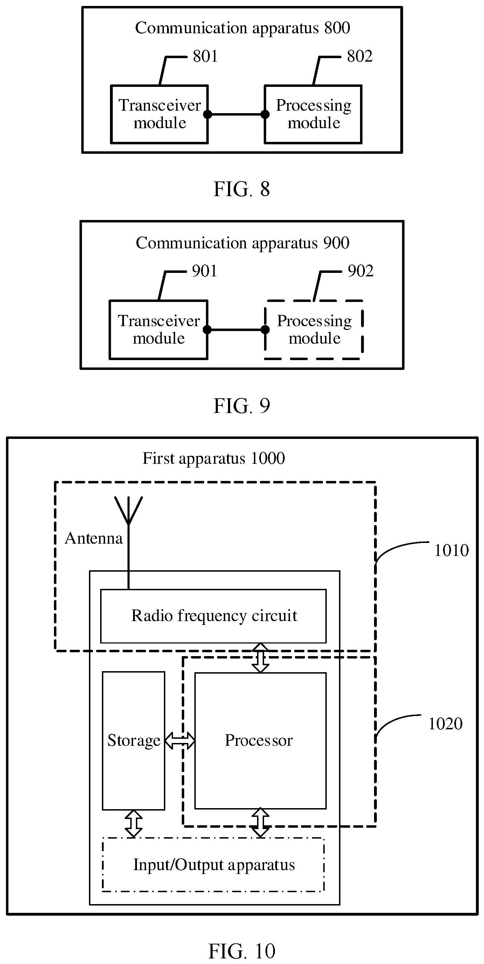

The following describes a communication apparatus provided in this application. FIG. 8 is a diagram of a first structure of a communication apparatus 800 according to an embodiment of this application. The communication apparatus 800 includes a processing module 801 and a transceiver module 802.

The communication apparatus 800 includes a network device, or a component (for example, a chip), a module, or a unit in the network device. The communication apparatus 800 may be configured to perform all or a part of steps performed by the network device in the embodiments shown in FIG. 5 and FIG. 6. For details, refer to the related descriptions in the embodiments shown in FIG. 5 and FIG. 6.

For example, the transceiver module 802 is configured to perform step 501 and step 502 in the embodiment shown in FIG. 5.

Optionally, the transceiver module 802 is further configured to perform step 500a, step 500b, step 501a, step 501b, step 501d, step 501e, step 501f, step 501g, step 502a, and step 504 in the embodiment shown in FIG. 5. The processing module 801 is configured to perform step 503 in the embodiment shown in FIG. 5.

The following describes a communication apparatus provided in this application. FIG. 9 is a diagram of a second structure of a communication apparatus 900 according to an embodiment of this application. The communication apparatus 900 includes a transceiver module 901. Optionally, the communication apparatus 900 further includes a processing module 902.

The communication apparatus 900 includes a positioning device, or a component (for example, a chip), a module, or a unit in the positioning device. The communication apparatus 900 may be configured to perform all or a part of steps performed by the positioning device in the embodiment shown in FIG. 5. For details, refer to the related descriptions in the embodiment shown in FIG. 5.

For example, the transceiver module 901 is configured to perform step 501d and step 501e in the embodiment shown in FIG. 5.

Optionally, the transceiver module 901 is configured to perform step 501f, step 501g, step 502a, step 504, and step 500a in the embodiment shown in FIG. 5.

Optionally, the transceiver module 901 is further configured to perform step 500d or step 500e.

Embodiments of this application further provide a first apparatus. FIG. 10 is a diagram of another structure of a first apparatus according to an embodiment of this application. Refer to FIG. 10. The first apparatus 1000 may be the first apparatus in the foregoing method embodiments, or may be a component (for example, a chip), a module, or a unit of the first apparatus in the foregoing method embodiments. The first apparatus 1000 may be configured to perform operations performed by the first apparatus in the foregoing method embodiments.

A processor is mainly configured to: process data or a signal, control the first apparatus, execute a corresponding software program, process data of the software program, and the like.

It should be noted that a capability of implementing a signal processing algorithm of the processor is weak, and a complex signal processing algorithm cannot be implemented.

A storage is mainly configured to store a software program and data. A radio frequency circuit is mainly configured to: perform conversion between a baseband signal and a radio frequency signal, and process the radio frequency signal.

An antenna is mainly configured to receive and send a radio frequency signal in a form of an electromagnetic wave.

Optionally, the first apparatus 1000 further includes an input/output apparatus, for example, a touchscreen, a display, or a keyboard, is mainly configured to: receive data input by a user and output data to the user.

When needing to send data, after performing baseband processing on the to-be-sent data, the processor outputs the baseband signal to the radio frequency circuit; and the radio frequency circuit performs radio frequency processing on the baseband signal and then sends the radio frequency signal to the outside in the form of the electromagnetic wave through the antenna. When data is sent to the first apparatus, the radio frequency circuit receives the radio frequency signal through the antenna, converts the radio frequency signal into the baseband signal, and outputs the baseband signal to the processor. The processor converts the baseband signal into data, and processes the data.

For ease of description, FIG. 10 shows only one storage and one processor. In an actual product of the first apparatus, there may be one or more processors and one or more storages. The storage may also be referred to as a storage medium, a storage device, or the like. The storage may be disposed independent of the processor, or may be integrated with the processor. This is not limited in this embodiment of this application.

In this embodiment of this application, the antenna and the radio frequency circuit that have a transceiver function may be considered as a transceiver unit of the first apparatus, and the processor having a processing function may be considered as a processing unit of the first apparatus. As shown in FIG. 10, the first apparatus includes a transceiver unit 1010 and a processing unit 1020. The transceiver unit may also be referred to as a transceiver, a transceiver machine, a transceiver apparatus, or the like. The processing unit may also be referred to as a processor, a processing board, a processing module, a processing apparatus, or the like.

Optionally, a component configured to implement a receiving function in the transceiver unit 1010 may be considered as a receiving unit, and a component configured to implement a sending function in the transceiver unit 1010 may be considered as a sending unit. In other words, the transceiver unit 1010 includes the receiving unit and the sending unit. The transceiver unit may also be referred to as the transceiver machine, the transceiver, the transceiver circuit, or the like. The receiving unit may also be referred to as a receiver machine, a receiver, a receiver circuit, or the like. The sending unit may also be referred to as a transmitter machine, a transmitter, a transmit circuit, or the like.

It should be understood that the transceiver unit 1010 is configured to perform a sending operation and a receiving operation of first apparatus in the foregoing method embodiments, and the processing unit 1020 is configured to perform an operation other than the receiving operation and the sending operation of the first apparatus in the foregoing method embodiments.

When the first apparatus is the chip, the chip includes a transceiver unit and a processing unit. The transceiver unit may be an input/output circuit or a communication interface. The processing unit is a processor, a microprocessor, an integrated circuit, or a logic circuit integrated on the chip. In the foregoing method embodiments, a sending operation corresponds to an output of the input/output circuit, and a receiving operation corresponds to an input of the input/output circuit.

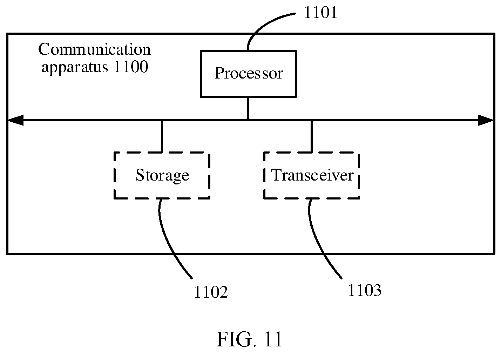

This application further provides a communication apparatus. FIG. 11 is a diagram of a third structure of a communication apparatus according to an embodiment of this application. Refer to FIG. 11. The communication apparatus 1100 includes a processor 1101.

Optionally, the communication apparatus 1100 further includes a storage 1102.

Optionally, the communication apparatus 1100 further includes a transceiver 1103.

In a possible implementation, the processor 1101, the storage 1102, and the transceiver 1103 are separately connected through a bus. The storage 1102 stores computer instructions.

When the communication apparatus 1100 includes a network device, or a component (for example, a chip), a module, or a unit in the network device, the communication apparatus 1100 may be configured to perform steps performed by the network device in the embodiments shown in FIG. 5 and FIG. 6. Refer to the related descriptions in the foregoing method embodiments.

In this implementation, the processing module 801 in the embodiment shown in FIG. 8 may be the processor 1101, and the transceiver module 802 in the embodiment shown in FIG. 8 may be the transceiver 1103.

When the communication apparatus 1100 includes a positioning device, or a component (for example, a chip), a module, or a unit in the positioning device, the communication apparatus 1100 may be configured to perform steps performed by the positioning device in the embodiment shown in FIG. 5. Refer to the related descriptions in the foregoing method embodiment.

In this implementation, the processing module 902 in the embodiment shown in FIG. 9 may be the processor 1101, and the transceiver module 901 in the embodiment shown in FIG. 9 may be the transceiver 1103.

An embodiment of this application further provides a communication system. The communication system includes a first apparatus and a network device. The first apparatus is configured to perform all or a part of steps performed by the first apparatus in the embodiments shown in FIG. 5 and FIG. 6. The network device is configured to perform all or a part of steps performed by the network device in the embodiments shown in FIG. 5 and FIG. 6.

Optionally, the communication system further includes a positioning device and a core network device. The positioning device is configured to perform all or a part of steps performed by the positioning device in the embodiment shown in FIG. 5. The core network device is configured to perform all or a part of steps performed by the core network device in the embodiment shown in FIG. 5.

An embodiment of this application further provides a computer program product including computer instructions. When the computer program product runs on a computer, the computer is enabled to perform communication methods in the embodiments shown in FIG. 5 and FIG. 6.

An embodiment of this application further provides a computer-readable storage medium, including computer instructions. When the computer instructions are run on a computer, the computer is enabled to perform communication methods in the embodiments shown in FIG. 5 and FIG. 6.

An embodiment of this application further provides a chip apparatus, including a processor, configured to invoke a computer program or computer instructions stored in a storage, to enable the processor to perform communication methods in the embodiments shown in FIG. 5 to FIG. 6.

Optionally, the processor is coupled to the storage through an interface.

Optionally, the chip apparatus further includes the storage, and the storage stores the computer program or the computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control program execution of communication methods in the embodiments shown in FIG. 5 and FIG. 6. The storage mentioned in any one of the foregoing descriptions may be a read-only memory (read-only memory, ROM), another type of static storage device that can store static information and instructions, a random access memory (random access memory, RAM), or the like.

In the several embodiments provided in this application, it should be understood that the disclosed system, apparatus, and method may be implemented in other manners. For example, the apparatus embodiments described above are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or a part of the technical solutions may be implemented in a form of a software product. The computer software product is stored in a storage medium, and includes several instructions for enabling a computer device (which may be a personal computer, a server, a network device, or the like) to perform all or a part of steps of the methods in embodiments of this application.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions recorded in the foregoing embodiments or equivalent replacements may still be made to a part of the technical features thereof. However, these modifications or replacements do not cause the essence of the corresponding technical solutions to depart from the scope of the technical solutions of embodiments of this application.

## Claims

1. A communication method, wherein the method comprises:
receiving, by a first apparatus, first information from a network device, wherein the first information is used to excite the first apparatus to send a positioning reference signal; and
sending, by the first apparatus, the positioning reference signal based on the first information.

2. The method according to claim 1, wherein the first information comprises memory address information used to store configuration information of the positioning reference signal in the first apparatus, or the first information comprises start memory address information used to store the configuration information of the positioning reference signal in the first apparatus, and a data length.

3. The method according to claim 2, wherein the configuration information of the positioning reference signal comprises sequence information used to generate the positioning reference signal.

4. The method according to claim 3, wherein the configuration information of the positioning reference signal further comprises frequency domain information of the positioning reference signal.

5. The method according to any one of claims 1 to 4, wherein sending, by the first apparatus, the positioning reference signal based on the first information comprises:
reading, by the first apparatus from a corresponding memory address of the first apparatus based on the first information, a sequence used to generate the positioning reference signal;
generating, by the first apparatus, the positioning reference signal based on the sequence; and
sending, by the first apparatus, the positioning reference signal.

6. The method according to any one of claims 1 to 5, wherein before receiving, by the first apparatus, the first information from the network device, the method further comprises:
receiving, by the first apparatus, configuration information from the network device, wherein the configuration information comprises the configuration information of the positioning reference signal; and
writing, by the first apparatus, the configuration information of the positioning reference signal into the corresponding memory address of the first apparatus.

7. The method according to claim 6, wherein the configuration information of the positioning reference signal comprises the sequence used to generate the positioning reference signal; and the configuration information further comprises the start memory address information and the data length for the sequence; and
writing, by the first apparatus, the configuration information of the positioning reference signal into the corresponding memory address of the first apparatus comprises:
determining, by the first apparatus, the memory address based on the start memory address information and the data length; and
writing, by the first apparatus, the sequence into the memory address.

8. The method according to claim 6 or 7, wherein the method further comprises:
sending, by the first apparatus, a reply message to the network device, wherein the reply message indicates that the configuration information of the positioning reference signal is successfully written into the memory address.

9. The method according to any one of claims 1 to 8, wherein the method further comprises:
sending, by the first apparatus, second information to a core network device or a positioning device, wherein the second information comprises at least one of the following: a tag type and positioning capability information of the first apparatus.

10. The method according to claim 9, wherein the tag type is a passive tag terminal, a semi-passive tag terminal, or an active tag terminal.

11. The method according to claim 9 or 10, wherein the positioning capability information comprises at least one of the following: a capability of supporting positioning or not, and a positioning reference signal sending capability.

12. A communication method, wherein the method comprises:
determining, by a network device, first information, wherein the first information is used to excite a first apparatus to send a positioning reference signal; and
sending, by the network device, the first information to the first apparatus.

13. The method according to claim 12, wherein the first information comprises memory address information used to store configuration information of the positioning reference signal in the first apparatus, or the first information comprises start memory address information used to store the configuration information of the positioning reference signal in the first apparatus, and a data length, wherein the start memory address information and the data length are used to determine a memory address of the configuration information of the positioning reference signal.

14. The method according to claim 12 or 13, wherein before sending, by the network device, the first information to the first apparatus, the method further comprises:
sending, by the network device, configuration information to the first apparatus, wherein the configuration information comprises the configuration information of the positioning reference signal.

15. The method according to claim 14, wherein the configuration information of the positioning reference signal comprises a sequence used to generate the positioning reference signal; and the configuration information further comprises the memory address information of the sequence; or the configuration information comprises the start memory address information and the data length for the sequence, wherein the start memory address information and the data length are used to determine the memory address for storing the sequence.

16. The method according to claim 14 or 15, wherein the method further comprises:
receiving, by the network device, a reply message from the first apparatus, wherein the reply message indicates that the configuration information of the positioning reference signal is successfully written into the corresponding memory address.

17. The method according to any one of claims 14 to 16, wherein before sending, by the network device, the configuration information to the first apparatus, the method further comprises:
receiving, by the network device, a first request from a positioning device, wherein the first request is used to request the network device to configure the positioning reference signal for the first apparatus, and the first request comprises an identifier of the first apparatus; and
sending, by the network device, a first response to the positioning device, wherein the first response comprises the configuration information of the positioning reference signal.

18. The method according to claim 17, wherein the first request further comprises a type of the first apparatus, and the type of the first apparatus is a tag terminal.

19. The method according to any one of claims 12 to 18, wherein before sending, by the network device, the first information to the first apparatus, the method further comprises:
receiving, by the network device, a second request from the positioning device, wherein the second request is used to request the network device to excite the first apparatus to send the positioning reference signal, and the second request further comprises information about a positioning exciting periodicity or information about a quantity of positioning exciting times, wherein the information about the positioning exciting periodicity indicates a periodicity in which the network device excites the first apparatus to send the positioning reference signal, and the information about the quantity of positioning exciting times indicates a quantity of times the network device excites the first apparatus to send the positioning reference signal.

20. The method according to claim 19, wherein sending, by the network device, the first information to the first apparatus comprises:
sending, by the network device, the first information to the first apparatus based on the information about the positioning exciting periodicity or the information about the quantity of positioning exciting times.

21. The method according to any one of claims 12 to 20, wherein before determining, by the network device, the first information, the method further comprises:
sending, by the network device, indication information to the positioning device, wherein the indication information indicates that the network device supports a function of communicating with the tag terminal, indicates that the network device has an exciting function, or indicates that the network device has a function of exciting the tag terminal to send the positioning reference signal.

22. The method according to any one of claims 12 to 21, wherein the method further comprises:
measuring, by the network device, the positioning reference signal to obtain a measurement result; and
sending, by the network device, the measurement result to the positioning device, wherein the measurement result is used to position the first apparatus.

23. A communication method, wherein the method comprises:
sending, by a positioning device, a first request to a network device, wherein the first request is used to request the network device to configure a positioning reference signal for a first apparatus, and the first request comprises an identifier of the first apparatus; and
receiving, by the positioning device, a first response from the network device, wherein the first response comprises configuration information of the positioning reference signal configured by the network device for the first apparatus.

24. The method according to claim 23, wherein the first request further comprises a type of the first apparatus, and the type of the first apparatus is a tag terminal.

25. The method according to claim 23 or 24, wherein before sending, by the positioning device, the first request to the network device, the method further comprises:
receiving, by the positioning device, second information from a core network device or the first apparatus, wherein the second information comprises at least one of the following: a tag type and positioning capability information of the first apparatus.

26. The method according to claim 25, wherein the tag type is a passive tag terminal, a semi-passive tag terminal, or an active tag terminal.

27. The method according to claim 25 or 26, wherein the positioning capability information comprises at least one of the following: a capability of supporting positioning or not, and a positioning reference signal sending capability.

28. The method according to any one of claims 23 to 27, wherein before sending, by the positioning device, the first request to the network device, the method further comprises:
receiving, by the positioning device, indication information from the network device, wherein the indication information indicates that the network device supports a function of communicating with the tag terminal, indicates that the network device has an exciting function, or indicates that the network device has a function of exciting the tag terminal to send the positioning reference signal.

29. The method according to any one of claims 23 to 28, wherein after receiving, by the positioning device, the first response from the network device, the method further comprises:
sending, by the positioning device, a second request to the network device, wherein the second request is used to request the network device to excite the first apparatus to send the positioning reference signal, and the second request further comprises information about a positioning exciting periodicity or information about a quantity of positioning exciting times, wherein the information about the positioning exciting periodicity indicates a periodicity in which the network device excites the first apparatus to send the positioning reference signal, and the information about the quantity of positioning exciting times indicates a quantity of times the network device excites the first apparatus to send the positioning reference signal.

30. The method according to any one of claims 23 to 29, wherein the method further comprises:
receiving, by the positioning device, a measurement result from the network device; and
positioning, by the positioning device, the first apparatus based on the measurement result.

31. An apparatus, wherein the apparatus comprises a transceiver module, wherein the transceiver module is configured to perform the method according to any one of claims 1 to 11; or the transceiver module is configured to perform the method according to any one of claims 23 to 30.

32. The apparatus according to claim 31, wherein the apparatus further comprises a processing module, wherein
if the transceiver module is configured to perform the method according to any one of claims 1 to 11, the processing module is configured to perform the method according to any one of claims 1 to 11; or
if the transceiver module is configured to perform the method according to any one of claims 23 to 30, the processing module is configured to perform the method according to any one of claims 23 to 30.

33. An apparatus, wherein the apparatus comprises a transceiver module and a processing module, wherein the transceiver module is configured to perform the method according to any one of claims 12 to 22, and the processing module is configured to perform the method according to any one of claims 12 to 22.

34. An apparatus, wherein the apparatus comprises a transceiver, wherein
the transceiver is configured to receive first information from a network device, wherein the first information is used to excite the apparatus to send a positioning reference signal; and
the transceiver is further configured to send the positioning reference signal based on the first information.

35. The apparatus according to claim 34, wherein the first information comprises memory address information used to store configuration information of the positioning reference signal in the apparatus, or the first information comprises start memory address information used to store the configuration information of the positioning reference signal in the apparatus, and a data length.

36. The apparatus according to claim 35, wherein the configuration information of the positioning reference signal comprises sequence information used to generate the positioning reference signal.

37. The apparatus according to claim 36, wherein the configuration information of the positioning reference signal further comprises frequency domain information of the positioning reference signal.

38. The apparatus according to any one of claims 35 to 37, wherein the apparatus further comprises a processor, wherein the processor is connected to the transceiver;
the processor is configured to read, from a corresponding memory address of the apparatus based on the first information, a sequence used to generate the positioning reference signal;
the processor is further configured to generate the positioning reference signal based on the sequence; and
the transceiver is configured to send the positioning reference signal.

39. The apparatus according to any one of claims 34 to 38, wherein the apparatus further comprises the processor, wherein the processor is connected to the transceiver;
the transceiver is further configured to receive configuration information from the network device, wherein the configuration information comprises the configuration information of the positioning reference signal; and
the processor is configured to write the configuration information of the positioning reference signal into the corresponding memory address of the apparatus.

40. The apparatus according to claim 39, wherein the configuration information of the positioning reference signal comprises the sequence used to generate the positioning reference signal; and the configuration information further comprises the start memory address information and the data length for the sequence;
the processor is further configured to determine the memory address based on the start memory address information and the data length; and
the processor is further configured to write the sequence into the memory address.

41. The apparatus according to claim 39 or 40, wherein
the transceiver is further configured to send a reply message to the network device, wherein the reply message indicates that the configuration information of the positioning reference signal is successfully written into the memory address.

42. The apparatus according to any one of claims 34 to 41, wherein
the transceiver is further configured to send second information to a core network device or a positioning device, wherein the second information comprises at least one of the following: a tag type and positioning capability information of the apparatus.

43. The apparatus according to claim 42, wherein the tag type is a passive tag terminal, a semi-passive tag terminal, or an active tag terminal.

44. The apparatus according to claim 42 or 43, wherein the positioning capability information comprises at least one of the following: a capability of supporting positioning or not, and a positioning reference signal sending capability.

45. A network device, comprising a processor and a transceiver, wherein the processor is connected to the transceiver;
the processor is configured to determine first information, wherein the first information is used to excite a first apparatus to send a positioning reference signal; and
the transceiver is configured to send the first information to the first apparatus.

46. The network device according to claim 45, wherein the first information comprises memory address information used to store configuration information of the positioning reference signal in the first apparatus, or the first information comprises start memory address information used to store the configuration information of the positioning reference signal in the first apparatus, and a data length, wherein the start memory address information and the data length are used to determine a memory address of the configuration information of the positioning reference signal.

47. The network device according to claim 45 or 46, wherein
the transceiver is further configured to send configuration information to the first apparatus, wherein the configuration information comprises the configuration information of the positioning reference signal.

48. The network device according to claim 47, wherein the configuration information of the positioning reference signal comprises a sequence used to generate the positioning reference signal; and the configuration information further comprises the memory address information of the sequence; or the configuration information comprises the start memory address information and the data length for the sequence, wherein the start memory address information and the data length are used to determine the memory address for storing the sequence.

49. The network device according to claim 47 or 48, wherein
the transceiver is further configured to receive a reply message from the first apparatus, wherein the reply message indicates that the configuration information of the positioning reference signal is successfully written into the corresponding memory address.

50. The network device according to any one of claims 47 to 49, wherein
the transceiver is further configured to receive a first request from a positioning device, wherein the first request is used to request the network device to configure the positioning reference signal for the first apparatus, and the first request comprises an identifier of the first apparatus; and
the transceiver is further configured to send a first response to the positioning device, wherein the first response comprises the configuration information of the positioning reference signal.

51. The network device according to claim 50, wherein the first request further comprises a type of the first apparatus, and the type of the first apparatus is a tag terminal.

52. The network device according to any one of claims 45 to 51, wherein
the transceiver is further configured to receive a second request from the positioning device, wherein the second request is used to request the network device to excite the first apparatus to send the positioning reference signal, and the second request further comprises information about a positioning exciting periodicity or information about a quantity of positioning exciting times, wherein the information about the positioning exciting periodicity indicates a periodicity in which the network device excites the first apparatus to send the positioning reference signal, and the information about the quantity of positioning exciting times indicates a quantity of times the network device excites the first apparatus to send the positioning reference signal.

53. The network device according to claim 52, wherein
the transceiver is further configured to send the first information to the first apparatus based on the information about the positioning exciting periodicity or the information about the quantity of positioning exciting times.

54. The network device according to any one of claims 45 to 53, wherein
the transceiver is further configured to send indication information to the positioning device, wherein the indication information indicates that the network device supports a function of communicating with the tag terminal, indicates that the network device has an exciting function, or indicates that the network device has a function of exciting the tag terminal to send the positioning reference signal.

55. The network device according to any one of claims 45 to 54, wherein
the processor is further configured to measure the positioning reference signal to obtain a measurement result; and
the transceiver is further configured to send the measurement result to the positioning device, wherein the measurement result is used to position the first apparatus.

56. A device, comprising a transceiver, wherein
the transceiver is configured to send a first request to a network device, wherein the first request is used to request the network device to configure a positioning reference signal for a first apparatus, and the first request comprises an identifier of the first apparatus; and
the transceiver is further configured to receive a first response from the network device, wherein the first response comprises configuration information of the positioning reference signal configured by the network device for the first apparatus.

57. The device according to claim 56, wherein the first request further comprises a type of the first apparatus, and the type of the first apparatus is a tag terminal.

58. The device according to claim 56 or 57, wherein
the transceiver is further configured to receive second information from a core network device or the first apparatus, wherein the second information comprises at least one of the following: a tag type and positioning capability information of the first apparatus.

59. The device according to claim 58, wherein the tag type is a passive tag terminal, a semi-passive tag terminal, or an active tag terminal.

60. The device according to claim 58 or 59, wherein the positioning capability information comprises at least one of the following: a capability of supporting positioning or not, and a positioning reference signal sending capability.

61. The device according to any one of claims 56 to 60, wherein
the transceiver is further configured to receive indication information from the network device, wherein the indication information indicates that the network device supports a function of communicating with the tag terminal, indicates that the network device has an exciting function, or indicates that the network device has a function of exciting the tag terminal to send the positioning reference signal.

62. The device according to any one of claims 56 to 61, wherein
the transceiver is further configured to send a second request to the network device, wherein the second request is used to request the network device to excite the first apparatus to send the positioning reference signal, and the second request further comprises information about a positioning exciting periodicity or information about a quantity of positioning exciting times, wherein the information about the positioning exciting periodicity indicates a periodicity in which the network device excites the first apparatus to send the positioning reference signal, and the information about the quantity of positioning exciting times indicates a quantity of times the network device excites the first apparatus to send the positioning reference signal.

63. The device according to any one of claims 56 to 62, wherein the device further comprises a processor, wherein the processor is connected to the transceiver;
the transceiver is further configured to receive a measurement result from the network device; and
the processor is configured to position the first apparatus based on the measurement result.

64. A computer-readable storage medium, wherein the computer-readable storage medium stores a computer program, and when the computer program is executed by an apparatus, the apparatus is enabled to perform the method according to any one of claims 1 to 11, the method according to any one of claims 12 to 22, or the method according to any one of claims 23 to 30.

65. A computer program product, wherein when the computer program product runs on a computer, the computer is enabled to perform the method according to any one of claims 1 to 11, the method according to any one of claims 12 to 22, or the method according to any one of claims 23 to 30.
